# EUROPEAN PATENT APPLICATION

(11) **EP 2 219 169 A1**
(43) Date of publication of application: **18.08.2010**
(21) Application number: 08856406.7
(22) Date of filing: 09.09.2008
(51) Int. Cl.: G09F 9/30, G02F 1/1333, G02F 1/1339

(54) **FLEXIBLE DISPLAY DEVICE**

(30) Priority: 06.12.2007 JP 2007316287
(71) Applicant: Sharp Kabushiki Kaisha, Osaka-shi, Osaka 545-8522 (JP)
(72) Inventor: WATANABE, Noriko, Osaka-shi Osaka 545-8522 (JP)
(74) Representative: Müller - Hoffmann & Partner
(86) International application number: PCT/JP2008/002489
(87) International publication number: WO 2009/072226

(57) **Abstract**

A display device includes: a display medium layer positioned between a flexible first substrate and a flexible second substrate; and a sealing member provided so as to surround the display medium layer between the first substrate and the second substrate. The sealing member has a curved portion that is curved so as to protrude outward toward a side opposite to the display medium layer as viewed from a direction normal to a surface of the first substrate in a flat state.

## Description

### TECHNICAL FIELD

The present invention relates to flexible display devices.

### BACKGROUND ART

In recent years, so-called flat panel displays have been widely used as display devices in various fields. Examples of the flat panel displays include liquid crystal display (LCD) devices, and organic electroluminescence (EL) display devices. The LCD devices and the organic EL display devices have been used in the fields of mobile displays, such as mobile phones and personal digital assistants (PDA), due to their features such as thin thickness and light weight. Further reduction in thickness and weight, and flexibility of display devices have been desired in these fields, and studies have been conducted to replace glass substrates with flexible substrates such as plastic.

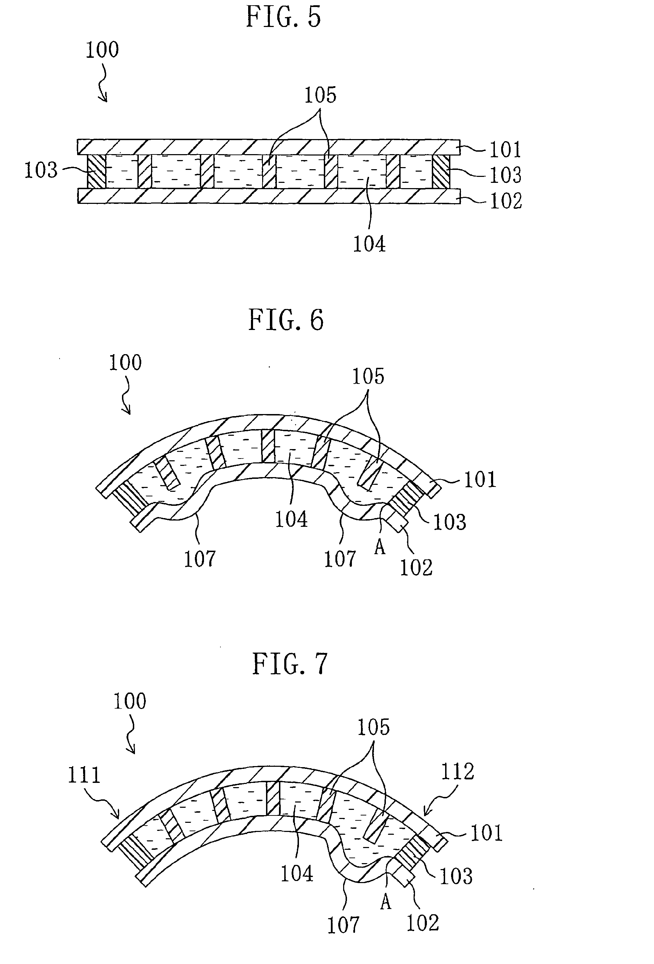

Problems of display devices using flexible substrates will be described below with respect to an LCD device as an example. As shown in a cross-sectional view of FIG. 5, an LCD device 100 includes a first flexible substrate 101, a second flexible substrate 102, and a liquid crystal layer 104 enclosed between the substrates 101, 102 by a rectangular frame-shaped sealing member 103. The thickness of the liquid crystal layer 104 is controlled by spacers 105 provided between the substrates 101, 102. Glass particles or resin particles having a uniform particle size, or columnar photo spacers can be used as the spacers 105. FIG. 5 shows an example in which a plurality of photo spacers 105 are formed on the first flexible substrate 101.

As shown in a cross-sectional view of FIG. 6, when the entire LCD device 100 is bent so that the first flexible substrate 101 protrudes outward, the first flexible substrate 101 and the second flexible substrate 102 have different radii of curvature from each other. Thus, the first flexible substrate 101, which is located outside, is subjected to a tensile force, while the second flexible substrate 102, which is located inside, is subjected to a compressive force.

As a result, when the LCD device 100 is bent in this manner, a compressive force is applied in the thickness direction to the liquid crystal layer near the center of a display region. On the other hand, the second flexible substrate 102, which is located inside, is locally deformed convexly inward (in the direction toward the center of curvature) near the sealing member 103 in the display region, forming convex portions 107, and thus, increasing the cell gap. Moreover, a delamination stress is applied in the direction away from the first flexible substrate 101 to a region A near the sealing member 103 in the second flexible substrate 102.

At this time, due to the presence of the spacers 105 such as photo spacers, the cell gap in the middle of the display region does not become smaller than the thickness defined by the spacers 105. On the other hand, in the region near the sealing member 103, the cell gap is increased, and the delamination stress, which is applied to the sealing member 103, is increased.

FIG. 7 is a cross-sectional view showing the state where the second flexible substrate 102 is deformed when the LCD device 100 is not bent along its center line so that the portions on both sides of the center line are bent equally, but is bent along its one side area with its other side area (the left side in the figure) being fixed. No substrate deformation occurs in a fixed end 111 of the LCD device 100, and deformation of the second flexible substrate 102 occurs only in a bent end 112, thereby forming a convex portion 107.

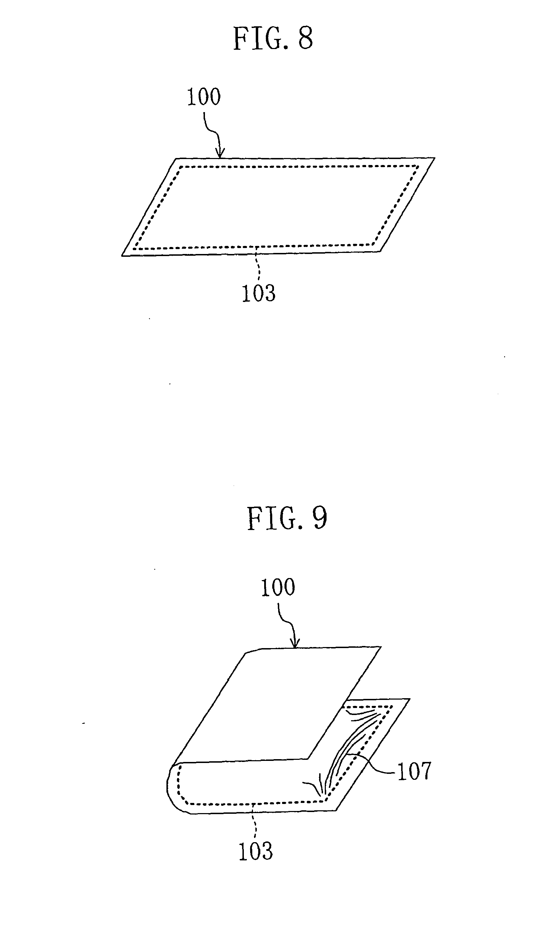

FIGS. 8 and 9 are perspective views schematically showing the display device of FIGS. 5 and 6. When the LCD device 100 is bent, a change in cell gap caused by the deformation of the flexible substrate appears as the convex portions 107 along the rectangular frame-shaped sealing member 103, as shown in FIG. 9.

Although the flexible substrate is less likely to be deformed in the corners of the sealing member 103, the convex portions 107 tend to be formed near the corners of the sealing member 103, causing problems such as delamination of the sealing member 103. As a solution to such problems, it is known to form the sealing member 103 having obtuse-angled corners, as described in Patent Document 1. This method helps reduce stress concentration on the regions near the corners. However, this stress concentration is reduced only slightly, and the level of delamination of the sealing member is only somewhat reduced.

### CITATION LIST

PATENT DOCUMENT
PATENT DOCUMENT 1: Japanese Published Patent Application No. H02-310528

### SUMMARY OF THE INVENTION

### TECHNICAL PROBLEM

Incidentally, in such LCD devices, it is desired to use a highly adhesive sealing material that can withstand a delamination stress, or a soft elastic sealing material that reduces the delamination stress.

However, highly adhesive sealing materials tend to have a greater adverse effect on the liquid crystal layer (an effect due to elution of adhesive components to liquid crystal). On the other hand, elastic sealing members have, in principle, poorer moisture permeability. Thus, improvement in adhesion property and elasticity of sealing members is limited if reliability required for the sealing members should be satisfied simultaneously.

The most effective way to prevent delamination and breakage of the sealing members is to physically press the inner side of the sealing member (that is, the interface with liquid crystal) which is subjected to the highest pressure. A structure can be attached along one or two sides of the sealing member to support and fix the inner side of the sealing member. However, this relatively large structure not only increases the overall size of display devices, but also prevents implementation of display devices having features as a flexible device such as flexibility, thin thickness, and light weight.

The present invention was developed in view of the above problems, and it is an object of the present invention to reduce delamination of a sealing member while ensuring flexibility, thin thickness, and light weight of display devices.

### SOLUTION TO THE PROBLEM

In order to achieve the above object, a sealing member has a curved portion in the present invention.

Specifically, a display device of the present invention includes: a flexible first substrate; a flexible second substrate positioned so as to face the first substrate; a display medium layer positioned between the first substrate and the second substrate; and a sealing member provided so as to surround the display medium layer between the first substrate and the second substrate, wherein the sealing member has a curved portion that is curved so as to protrude outward toward a side opposite to the display medium layer as viewed from a direction normal to a surface of the first substrate in a flat state.

The curved portion of the sealing member may have an elliptical arc shape.

The curved portion of the sealing member may have a circular arc shape.

The sealing member may be formed by two linear portions extending parallel to each other, and two of the curved portion connecting respective ends of the linear portions so that the sealing member has an annular overall shape.

The display device may further include: a fixed end that is supported and fixed; and a bent end that is subjected to an external force, wherein the curved portion of the sealing member may be formed in the bent end.

The sealing member may be made of an epoxy resin.

It is preferable that the sealing member be made of a silicone resin or a thermoplastic elastomer.

The display medium layer may be a liquid crystal layer.

### [Functions]

Functions of the present invention will be described below.

Since both the first substrate and the second substrate are flexible, the entire display device is also flexible. In the case where an external force is applied to the display device to bend the entire display device, and for example, the first substrate is located outside in the direction of the radius of curvature, and the second substrate is located inside in the direction of the radius of curvature, the first substrate is subjected to a tensile force, while the second substrate is subjected to a compressive force.

At this time, since the curved portion of the sealing member has no corners like those in conventional examples, a delamination stress is not concentrated on the corners. Thus, convex portions are less likely to be formed in the second substrate near the sealing member. Even if convex portions are formed, such convex portions can be concentrated in a small region near the top of the curved portion of the sealing member (the middle position in the longitudinal direction of the curved portion).

Thus, even if the inner side of the sealing member is reinforced, it is enough to reinforce only a region near the top of the curved portion. This enables delamination of the sealing member to be reduced while ensuring flexibility, thin thickness, and light weight of the display device.

In the case where the display device includes the fixed end that is supported and fixed, and the bent end that is subjected to an external force, a delamination stress is not applied to the fixed end, but to the bent end. Thus, the curved portion of the sealing member is formed in the bent end. This enables delamination of the sealing member to be reduced efficiently.

### ADVANTAGES OF THE INVENTION

According to the present invention, since the sealing member of the flexible display device has a curved portion, a delamination stress can be dispersed in a preferable manner in the curved portion. Thus, delamination of the sealing member can be reduced while ensuring the flexibility, thin thickness, and light weight of the display device.

### BRIEF DESCRIPTION OF THE DRAWINGS

[FIG. 1] FIG. 1 is a perspective view schematically showing the external appearance of an LCD device of a first embodiment.
[FIG. 2] FIG. 2 is a perspective view schematically showing an overview of the LCD device of the first embodiment in a bent state.
[FIG. 3] FIG. 3 is an enlarged cross-sectional view showing a main part of the LCD device of the first embodiment.
[FIG. 4] FIG. 4 is a perspective view schematically showing the external appearance of an LCD device of a second embodiment.
[FIG. 5] FIG. 5 is a cross-sectional view showing a conventional LCD device in a flat state.
[FIG. 6] FIG. 6 is a cross-sectional view showing the conventional LCD device in a bent state.
[FIG. 7] FIG. 7 is a cross-sectional view showing the conventional LCD device bent with its one end being fixed.
[FIG. 8] FIG. 8 is a perspective view showing the conventional LCD device in a flat state.
[FIG. 9] FIG. 9 is a perspective view showing the conventional LCD device in a bent state.

### DESCRIPTION OF REFERENCE CHARACTERS

- 1: LCD Device
- 11: First Substrate
- 12: Second Substrate
- 13: Sealing Member
- 14: Liquid Crystal Layer (Display Medium Layer)
- 21, 26: Plastic Substrate
- 22: Moisture-Proof Film
- 23: Pixel Electrode
- 24, 29: Alignment Film
- 25: Spacer
- 27: Moisture-Proof Film
- 28: Transparent Electrode
- 31: Display Region
- 32: Non-Display Region
- 38: Second Linear Portion
- 39: Linear Portion, First Linear Portion
- 40: Curved Portion
- 41: Top
- 42: Convex Portion
- 51: Fixed End
- 52: Bent End

### DESCRIPTION OF EMBODIMENTS

Embodiments of the present invention will be described in detail below with reference to the accompanying drawings. Note that the present invention is not limited to the following embodiments.

### (First Embodiment)

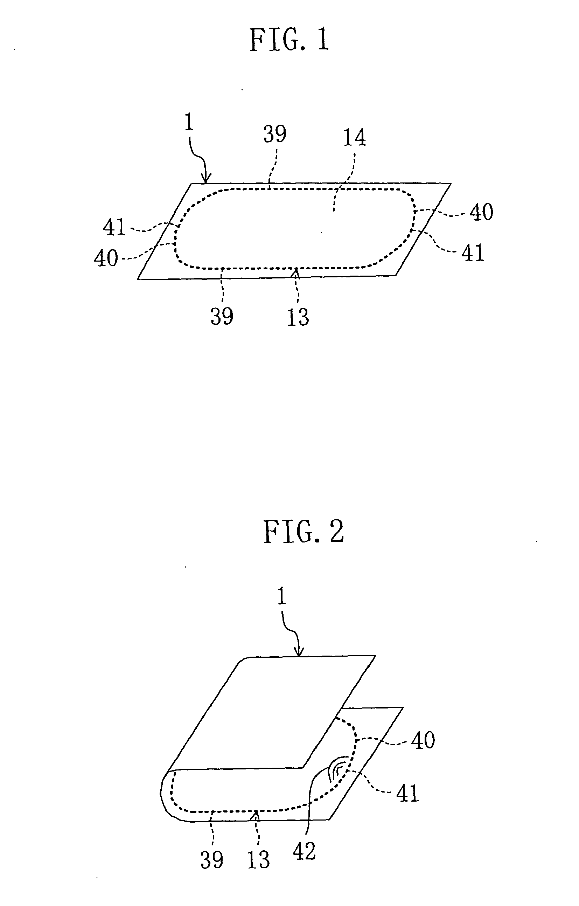

FIGS. 1-3 show a first embodiment of the present invention. In the first embodiment, an LCD device 1 will be described as an example of display devices.

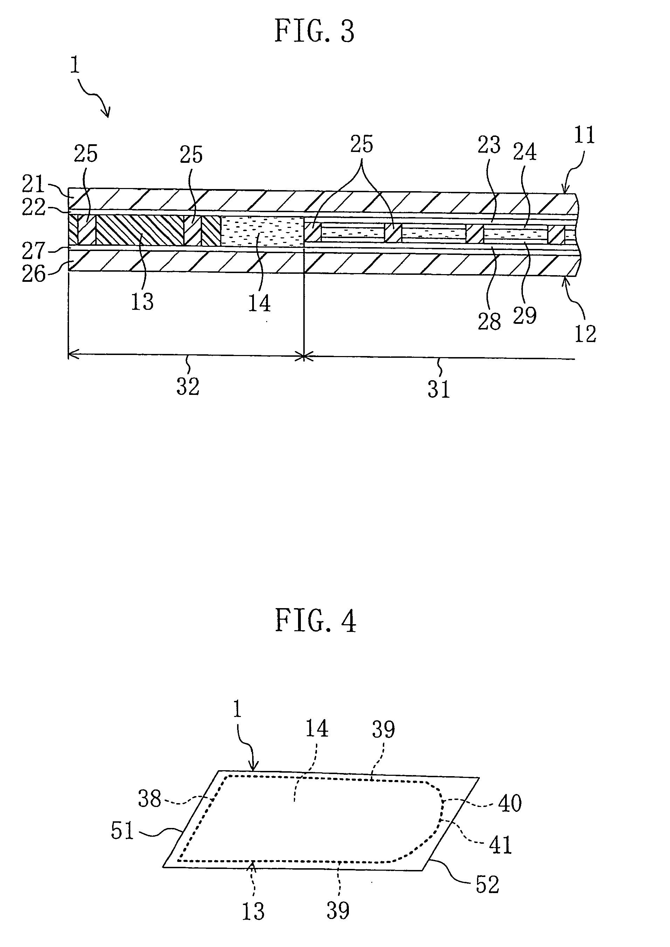

FIG. 1 is a perspective view schematically showing the external appearance of the LCD device of the first embodiment. FIG. 2 is a perspective view schematically showing an overview of the LCD device of the first embodiment in a bent state. FIG. 3 is an enlarged cross-sectional view showing a main part of the LCD device.

As shown in FIG. 3, the LCD device 1 includes a flexible first substrate 11, a flexible second substrate 12 positioned so as to face the first substrate 11, a liquid crystal layer 14 as a display medium layer provided between the first substrate 11 and the second substrate 12, and a sealing member 13 provided so as to surround the liquid crystal layer 14 between the first substrate 11 and the second substrate 12. The LCD device 1 is configured so that the entire LCD device 1 can be bent and deformed.

As shown in FIG. 3, a rectangular plastic substrate 21, a moisture-proof film 22, a plurality of pixel electrodes 23, a plurality of thin film transistors (hereinafter referred to as the "TFTs"), not shown, and an alignment film 24 are formed over the first substrate 11. The plastic substrate 21 is a flexible transparent plastic substrate made of e.g., polyether sulfone (PES), polyethylene terephthalate (PET), or the like. The moisture-proof film 22 is laminated on the surface located on the liquid crystal layer 14 side of the plastic substrate 21. The plurality of pixel electrodes 23 are laminated on the surface of the moisture-proof film 22. The plurality of TFTs are connected to the pixel electrodes 23, respectively. The alignment film 24 covers the pixel electrodes 23, the TFTs, and the like.

Note that flexible substrates, such as a composite substrate containing glass fibers, glass cloths, or the like in plastic, may be used instead of the plastic substrate 21.

A rectangular plastic substrate 26 similar to the first substrate 11, a moisture-proof film 27, a transparent electrode 28, and an alignment film 29 are formed over the second substrate 12. The moisture-proof film 27 is laminated on the surface located on the liquid crystal layer 14 side of the plastic substrate 26. The transparent electrode 28 is laminated on the surface of the moisture-proof film 27, and is made of indium tin oxide (ITO) or the like. The alignment film 29 covers the transparent electrode 28. Color filters, not shown, are formed over the second substrate 12.

Photo spacers 25 are formed at predetermined intervals over the second substrate 12. The photo spacers 25 are a plurality of spacers 25 interposed between the first substrate 11 and the second substrate 12, and having a height that defines the thickness of the liquid crystal layer 14. The spacers 25 are made of a photosensitive resin or the like. Note that, for example, particulate spacers such as a resin may be used as the spacers 25.

As shown in FIGS. 1 and 3, the liquid crystal layer 14 is enclosed between the first substrate 11 and the second substrate 12 so as to be surrounded by a frame-shaped sealing member 13. As shown in FIG. 3, a display region 31, which contributes to display, is formed in a region located inside the sealing member 13, where the pixel electrodes 23 and the transparent electrode 28 are formed. On the other hand, a non-display region 32, which does not contribute to display, is formed in a region located outside the display region 31. For example, nematic liquid crystal is used as a liquid crystal material. However, other liquid crystal materials, such as cholesteric liquid crystal and smectic liquid crystal may be used as the liquid crystal material.

For example, a non-conductive resin having a strong adhesion property, such as an epoxy resin, can be used as the sealing member 13. However, it is more preferable to use a highly elastic thermoplastic resin, such as a silicone resin and a thermoplastic elastomer, as the sealing member 13. The sealing member 13 is formed along the four sides of the first substrate 11 and the second substrate 12, and holds the first substrate 11 and the second substrate 12 in close contact with each other.

The sealing member 13 has curved portions 40, and each curved portion 40 is curved so as to protrude outward toward the side opposite to the liquid crystal layer 14 as viewed from the direction normal to the surface of the first substrate 11 in a flat state.

That is, as shown in FIG. 1, the LCD device 1 has a rectangular overall shape. The sealing member 13 is formed by two linear portions 39 respectively extending along the longer sides of the LCD device 1, and two curved portions 40 respectively extending along the shorter sides of the LCD device 1.

The two linear portions 39 extend parallel to each other. On the other hand, the two curved portions 40 connect the respective ends of the linear portions 39 so that the sealing member 13 has an annular overall shape. The curved portions 40 have a circular arc shape. Note that the curved portions 40 may have other shapes such as an elliptical arc shape.

In order to manufacture the LCD device 1, first, a SiO₂ film as the moisture-proof film 22, 27 is formed with a thickness of about 1,000 Ǻ on the surface of each plastic substrate 21, 26 by a sputtering method. The plastic substrates 21, 26 are film substrates having a thickness of about 50 µm. Then, by known methods, the TFTs and the like are formed over the plastic substrate 21, while the color filters and the like are formed over the plastic substrate 26. An ITO film is formed over each plastic substrate 21, 26 by a sputtering method to form the electrodes 23, 28, respectively.

Then, a photosensitive resin is applied to the plastic substrate 26, and the plurality of photo spacers 25 are formed at predetermined intervals by photolithography. The photo spacers 25 are formed in, e.g., a substantially columnar shape having a height of 5 µm and a diameter of 20 µm. The alignment films 24, 29 are respectively formed over the plastic substrates 21, 26 so as to cover the above electrodes and the like.

Subsequently, a liquid crystal material is injected between the first substrate 11 and the second substrate 12 by a one drop fill method. That is, first, an uncured sealing member 13 is supplied to, e.g., the non-display region 32 of the second substrate 12 by a dispenser or the like. At this time, the linear portions 39 are drawn along the direction of the longer sides of the second substrate 12, and the curved portions 40 are drawn along the direction of the shorter sides of the second substrate 12.

Then, the liquid crystal material is dropped on a region located inside the sealing member 13 in the second substrate 12. Thereafter, the first substrate 11 and the second substrate 12 are positioned between two elastic body sheets and bonded together under vacuum. Each elastic body sheet has a thickness of about 2 mm. The bonded body of the first substrate 11 and the second substrate 12 is heated and compressed to cure the sealing member 13. The LCD device 1 is manufactured in this manner.

### [Effects of the First Embodiment]

Thus, according to the first embodiment, the frame-shaped sealing member 13 is formed so as to have the curved portions 40. Thus, a delamination stress, acting to delaminate the sealing member 13, is dispersed in a preferable manner in the curved portions 40, whereby delamination of the sealing member 13 can be reduced.

That is, since the curved portions 40 of the sealing member 13 have no corners like those in conventional examples, the delamination stress is not concentrated on the corners. Thus, convex portions are less likely to be formed in the first substrate 11 or the second substrate 12 near the sealing member 13. As shown in FIG. 2, even if convex portions 42 are formed, such convex portions 42 can be concentrated in a small region near the top (the middle position in the longitudinal direction of the curved portion 40) 41 of the curved portion 40 of the sealing member 13. Thus, the influence of the display region 31 on display quality can be reduced in a preferable manner.

Moreover, even if the inner side of the sealing member 13 is reinforced, it is enough to reinforce only the region near the top 41 of each curved portion 40. Thus, delamination of the sealing member 13 can be reduced while ensuring the flexibility, thin thickness, and light weight of the LCD device 1. Moreover, an LCD device, which is satisfactory in terms of both display quality and reliability, can be obtained by blocking light only in the region near each top 41 of the sealing member 13 so that this region does not affect display, or by reinforcing only the region near the top 41 of the sealing member 13.

### (Second Embodiment)

FIG. 4 shows a second embodiment of the present invention.

FIG. 4 is a perspective view schematically showing the external appearance of an LCD device of the second embodiment. Note that, in the following embodiments, the same parts as those in FIGS. 1-3 are denoted by the same reference characters, and detailed description thereof will be omitted.

Although the sealing member 13 is formed by the pair of linear portions 39 and the pair of curved portions 40 in the first embodiment, only one curved portion 40 is provided in the sealing member 13 in the second embodiment.

That is, the LCD device 1 includes a fixed end 51 that is supported by, and fixed to an external element, and a bent end 52 positioned so as to face the fixed end 51 and subjected to an external force.

The sealing member 13 is formed by two first linear portions 39 extending parallel to each other in the direction of the longer sides of the LCD device 1, a second linear portion 38 extending in the direction of the shorter sides thereof in the fixed end 51, and a curved portion 40 extending in the direction of the shorter sides in the bent end 52.

### [Effects of the Second Embodiment]

Thus, in the case where the LCD device 1 includes the fixed end 51 that is supported and fixed, and the bent end 52 that is subjected to an external force, a delamination stress is not applied to the fixed end 51, but to the bent end 52. In view of this, in the second embodiment, the curved portion 40 of the sealing member 13 is formed in the bent end 52. Thus, only a required portion of the sealing member 13 is formed as the curved portion 40, whereby delamination of the sealing member 13 can be efficiently reduced.

### (Other Embodiments)

Although the LCD device 1 was described as an example of display devices in the first and second embodiments, the present invention is not limited to this, and the present invention is similarly applicable to other display devices such as an organic EL display device having a light-emitting layer as a display medium layer.

### INDUSTRIAL APPLICABILITY

As described above, the present invention is useful for flexible display devices, and is especially suitable for reducing delamination of a sealing member while ensuring the flexibility, thin thickness, and light weight of the display devices.

## Claims

1. A display device, comprising:
a flexible first substrate;
a flexible second substrate positioned so as to face the first substrate;
a display medium layer positioned between the first substrate and the second substrate; and
a sealing member provided so as to surround the display medium layer between the first substrate and the second substrate, wherein
the sealing member has a curved portion that is curved so as to protrude outward toward a side opposite to the display medium layer as viewed from a direction normal to a surface of the first substrate in a flat state.

2. The display device of claim 1, wherein
the curved portion of the sealing member has an elliptical arc shape.

3. The display device of claim 1, wherein
the curved portion of the sealing member has a circular arc shape.

4. The display device of claim 1, wherein
the sealing member is formed by two linear portions extending parallel to each other, and two of the curved portion connecting respective ends of the linear portions so that the sealing member has an annular overall shape.

5. The display device of claim 1, further comprising:
a fixed end that is supported and fixed; and
a bent end that is subjected to an external force, wherein
the curved portion of the sealing member is formed in the bent end.

6. The display device of claim 1, wherein
the sealing member is made of an epoxy resin.

7. The display device of claim 1, wherein
the sealing member is made of a silicone resin or a thermoplastic elastomer.

8. The display device of claim 1, wherein
the display medium layer is a liquid crystal layer.
